# EUROPEAN PATENT SPECIFICATION

(11) **EP 2 760 928 B1**
(45) Date of publication and mention of the grant of the patent: **26.12.2018**
(21) Application number: 11873111.6
(22) Date of filing: 29.09.2011
(51) Int. Cl.: C08K 5/521, C08G 18/08, C08J 9/04

(54) **USE OF TRIALKYL PHOSPHATE AS A SMOKE SUPPRESSANT IN POLYURETHANE FOAM**
VERWENDUNG VON TRIALKYLPHOSPHAT ALS RAUCHUNTERDRÜCKER BEI POLYURETHANSCHAUMSTOFFEN
UTILISATION DE PHOSPHATE DE TRIALKYLE COMME SUPPRESSEUR DE FUMÉE DANS DE LA MOUSSE DE POLYURÉTHANE

(43) Date of publication of application: 06.08.2014
(73) Proprietor: Dow Global Technologies LLC, Midland, MI 48674 (US)
(72) Inventor: XU, Jianping, Zhejiang 310027 (CN); QI, Yu Dong, Midland Michigan 48674 (US); LOTTI, Luca, I-42100 Reggio nell'Emilia (IT); TAI, Xiangyang, Shanghai 201208 (CN)
(74) Representative: Beck Greener
(86) International application number: PCT/CN2011/080336
(87) International publication number: WO 2013/044474

(56) References cited:
- EP-A1- 1 746 129
- EP-A2- 1 702 947
- WO-A1-03/099896
- WO-A1-2006/003421
- WO-A1-2007/110179
- WO-A1-2007/110179
- WO-A1-2012/067685
- JP-A- H07 242 721
- JP-A- 2005 060 551
- US-A- 4 076 657
- US-A1- 2006 211 784
- DATABASE WPI Week 199546 Thomson Scientific, London, GB; AN 1995-355301 XP002739290, -& JP H07 242721 A (NISSHINBO IND INC) 19 September 1995 (1995-09-19)
- DATABASE WPI Week 200523 Thomson Scientific, London, GB; AN 2005-217919 XP002739291, -& JP 2005 060551 A (SUMITOMO BAYER URETHANE CO) 10 March 2005 (2005-03-10)

## Description

### FIELD

The present application relates to a method for using trialkyl phosphate to suppress smoke generation from polyurethane foams.

### BACKGROUND

Polyurethanes (PUs) are suitable for a large number of applications. Rigid polyurethane (PUR) and/or polyisocyanurate (PIR) foams providing superior thermal insulating properties are developing into a class of promising materials for construction, for example, for insulation cladding and roofing metal faced sandwich panels. However, polyurethanes may be flammable when exposed to fire. To solve this issue, flame retardants used to inhibit or resist the spread of fire are usually added. Typical flame retardant additives include halogenated organic compounds, inorganic fillers and phosphorous-containing compounds, for example, tris(2-chloro-isopropyl phosphate (TCPP), triethyl phosphate (TEP), resorcinol bis(diphenyl phosphate) (RDP). Due to the ever present concerns for the environment and safety, halogen-free flame retardants are now favored.

Recently, people are more aware that smoke and toxic gases generated during fire situations are detrimental to human health; moreover, even a limited quantity of dark smoke in a building during a fire could prevent people from orienting and finding the exits. As a result, stricter smoke performance requirements are appearing while most former regulations are focusing on flame behavior. For example, construction products will need to reach Bs2d0 smoke class rating in the Single Burning Item (SBI) EN13823 test in European markets. These requirements can pose a challenge for PU compositions, and even for PIR foams, which are rated high for the flame retardancy. Although efficient in suppressing or inhibiting the combustion of a resin, many flame retardants are ineffective at producing foams generating only small amount of smoke when burning. Incumbent technology in improving smoke suppression of the polyurethanes include, for example, incorporating smoke suppressants, which are compounds capable of reducing smoke generation when exposed to fire. Examples of compounds capable of providing smoke suppression property include inorganic fillers (for example, aluminum hydroxide (also known as ATH or aluminum trihydrate), magnesium hydroxide (also known as magnesium dihydroxide), zinc salts and molybdenum containing compounds). However, the inorganic fillers may not be soluble in polyol components, which results in poor dispersion in polymer matrix. For example, techniques and/or equipments will need to be developed to handle the relatively high viscosity of ATH dispersions in polyol components and rapid settlement of ATH from suspension, especially when spray foaming or high-pressure foaming. In addition, the large amount of ATH usually needed to achieve desirable smoke suppression may have adverse effects on physical properties.

Thus, it is desirable to provide a method to improve smoke suppression performance of polyurethane foam while at the same time affording easy processability. It is also desirable to provide a polyurethane composition with improved smoke suppression in absence of halogenated flame retardants, thus having less environmental impacts.

### BRIEF SUMMARY

The invention according to claim 1 relates to the use of trialkyl phosphate as a smoke suppressant in polyurethane foam comprising the step of including in the polyurethane foam a trialkyl phosphate having at least one alkyl group with two carbon atoms and the polyurethane foam having an absence of halogenated flame retardants.

The use of the above trialkyl phosphate as a smoke suppressant offers a polyurethane foam, preferably a rigid polyurethane foam, that generates significantly less smoke when burned (that is, has an improved smoke suppression property) and that avoids the previously identified processing difficulties during manufacturing associated with inorganic additives (that is, provides easy processability). In addition, the invention does not require the use of halogenated flame retardants and so is environmentally friendly.

### DETAILED DESCRIPTION

"Smoke suppressant" refers to an additive in a composition or an article that results in smoke suppression for the composition or article when expose to fire as compared to the composition or article without the smoke suppressant.

"Smoke suppression" refers to a reduction of smoke generation as determined according to ASTM D2843-1999 Smoke Density testing. Lower values of Maximum Smoke Density (MSD) and Smoke Density Rating (SDR) mean lower smoke generation.

A trialkyl phosphate in the invention has at least one of the alkyl groups having 2 carbon atoms. The other two alkyl groups of the trialkyl phosphate may, independently the same or different, contain from one to 8 carbon atoms, including a linear or branched alkyl group, a cyclic alkyl group, an alkoxyethyl, a hydroxyl alkyl, a hydroxyl alkoxyalkyl group, and a linear or branched alkylene group. Examples of the other two alkyl groups of the trialkyl phosphate include, for example, methyl, ethyl, propyl, butyl, n-propyl, isopropyl, n-butyl, isobutyl, sec-butyl, tert-butyl, butoxyethyl, isopentyl, neopentyl, isohexyl, isoheptyl, cyclohexyl, propylene, 2-methylpropylene, neopentylene, hydroxymethyl, hydroxyethyl, hydroxypropyl or hydroxybutyl. Blends of different trialkyl phosphates may also be used in the invention. The three alkyl groups of the trialkyl phosphate may be the same. The trialkyl phosphate is desirably triethyl phosphate (TEP).

"Polyurethane foam" also includes polyisocyanurate foam, urethane-modified polyisocyanurate foam, polyurethane-polyurea foam and polyisocyanurate-polyurethane-polyurea foam. "Rigid polyurethane foam" is typically a highly crosslinked, cellular, closed-cell, thermoset foam.

A polyurethane foam is made from a polyurethane foam forming composition. "Polyurethane foam forming composition" comprises at least one polyol, at least one isocyanate, a blowing agent and auxiliary additives. The trialkyl phosphate is included in the polyurethane foam by incorporating the trialkyl phosphate into a polyurethane foam forming composition and then forming a polyurethane foam from the polyurethane foam forming composition. The concentration of the trialkyl phosphate is desirably 3 weight percent (wt%) or more, preferably 3.5 wt% or more, more preferably 5 wt% or more and still most preferably 10 wt% or more and at the same time is desirably 25 wt% or less, preferably 20 wt% or less, and still more preferably 15 wt% or less, based upon the weight of the polyurethane foam.

A polyol is a compound which contains two or more isocyanate reactive groups, generally active-hydrogen groups, such as -OH, primary or secondary amines, and -SH. Generally the polyol may have a functionality (average number of isocyanate-reactive groups/molecule) of 2 or more, preferably 3 or more and at the same time desirably 12 or less, preferably 10 or less and still more preferably 8 or less. The polyol may have a hydroxyl number of 30 or more, preferably 150 or more, more preferably 180 or more and at the same time desirably 3000 or less, preferably 1500 or less, more preferably 800 or less and still most preferably 700 or less. The polyol can also be one polyol or a combination of more than one polyol.

Examples of suitable polyols include polyether polyols, polyester polyols, polyhydroxy-terminated acetal resins, polyalkylene carbonate-based polyols, hydroxyl-terminated amines and polyamines. Examples of these and other suitable isocyanate-reactive materials are described more fully in for example U.S. Patent No. 4,394,491. The polyols may also include polymer polyols. In a polymer polyol, polymer particles are dispersed in the conventional petroleum-based polyol. Such polymer particles are well known to those skilled in the art, including, for example, styrene-acrylonitrile (SAN), polyisocyanate polyaddition products (PIPA) or polyurea polyols (PHD), acrylonitrile (ACN), polystyrene (PS), methacrylonitrile (MAN), polyurea (PHD), and methyl methacrylate (MMA) particles.

The polyols may include at least one of polyoxalkylene polyol having an equivalent weight in a range of 20-2500 (ranges presented herein are inclusive of endpoints). Such polyols may have a combined nominal functionality of 2-10. The polyols may for example be poly(propylene oxide) homopolymers, poly(ethylene oxide) homopolymers, random copolymers of propylene oxide and ethylene oxide in which the poly(ethylene oxide) content is, for example, from 1 wt% to 50 wt%, ethylene oxide-capped poly(propylene oxide) homopolymers and ethylene oxide-capped random copolymers of propylene oxide and ethylene oxide. The polyols may be initiated with, for example, water, organic dicarboxylic acids such as succinic acid, adipic acid, phthalic acid, terephthalic acid; or polyhydric alcohols (such as dihydric to pentahydric alcohols or dialkylene glycols), for example, ethanediol, 1,2- and 1,3-propanediol, diethylene glycol, dipropylene glycol, 1,4-butanediol, 1,6-hexanediol, glycerol, trimethylolpropane, pentaerythritol, sorbitol, and sucrose or blends thereof; linear and cyclic amine compounds which may also contain a tertiary amine such as ethanoldiamine, triethanoldiamine, and various isomers of toluene diamine, methyldiphenylamine, aminoethylpiperazine, ethylenediamine, N-methyl-1,2-ethanediamine, N-methyl-1,3-propanediamine, N,N-dimethyl-1,3-diaminopropane, N,N-dimethylethanolamine, diethylene triamine, bis-3-aminopropyl methylamine, aniline, aminoethyl ethanolamine, 3,3-diamino-N-methylpropylamine, N,N-dimethyldipropylenetriamine, aminopropyl-imidazole and mixtures thereof; or a combination of at least two of them. Examples include SPECFLEX™ NC630 brand polyol (SPECFLEX is a trademark of The Dow Chemical Company), SPECFLEX™ NC 632, VORALUX™ HF 505 brand polyol (VORALUX is a trademark of The Dow Chemical Company), VORANOL™ 280 brand polyol (VORANOL is a trademark of The Dow Chemical Company, VORANOL CP1421 brand polyol, VORANOL CP700 brand polyol, VORANOL CP1055 brand polyol, VORANOL CP260 brand polyol, VORANOL CP450 brand polyol, VORANOL CP 6001 brand polyol, VORANOL IP585 brand polyol, VORANOL RA800 brand polyol, VORANOL RA640 brand polyol, VORANOL RH360 brand polyol, VORANOL RN411 brand polyol, VORANOL RN482 brand polyol, and VORANOL RN490 brand polyol, all available from The Dow Chemical Company. The polyol can comprise any one or combination of more than one of the polyols taught herein.

In some embodiments, the polyols may be initiated with glycerol, sucrose, sorbitol or a combination of at least two of them. The polyol composition may include polyoxyethylene polyoxypropylene polyols initiated with a blend of glycerol and sucrose and having an equivalent weight of between 1000 and 2500 and a polyoxyethylene percentage of between 15 wt% and 40 wt%, such as VORANOL 280 brand polyol available from The Dow Chemical Company.

Polyester polyols include reaction products of polycarboxylic acids or their anhydrides with polyhydric alcohols. The polycarboxylic acids or anhydrides may be aliphatic, cycloaliphatic, aromatic and/or heterocyclic. Examples of polycarboxylic acids include oxalic acid, malonic acid, succinic acid, glutaric acid, adipic acid, pimelic acid, suberic acid, azelaic acid, sebacic acid, maleic acid, fumaric acid, glutaconic acid, α-hydromuconic acid, β-hydromuconic acid, α-butyl-α-ethyl-glutaric acid, α,β-diethylsuccinic acid, isophthalic acid, terephthalic acid, hemimellitic acid, and 1,4-cyclohexanedicarboxylic acid. Examples of suitable polyhydric alcohol including both aliphatic and aromatic may be such as ethylene glycol, 1,3-propylene glycol, 1,2-propylene glycol, 1,4-butylene glycol, 1,3-butylene glycol, 1,2-butylene glycol, 1,5-pentane diol, 1,4-pentane diol, 1,3-pentane diol, 1,6-hexane diol, 1,8-octane diol, neopentyl glycol, cyclohexane dimethanol, 1,7-heptane diol, glycerol, 1,1,1,-trimethylolpropane, 1,1,1-trimethylolethane, hexane-1,2,6-triol, α-methyl glucoside, pentaerythritol, quinitol, mannitol, sorbitol, sucrose, methyl glycoside, diethylene glycol, triethylene glycol, tetraethylene glycol, dipropylene glycol, dibutylene glycol or blends thereof. Also included are compounds derived from phenols such as 2,2-(4,4'-hydroxyphenyl)propane, commonly known as bisphenol A, bis(4,4'-hydroxyphenyl)sulfide, and bis-(4,4'-hydroxyphenyl)sulfone.

It is desirable to use aromatic-initiated polyether or polyester polyols or mixtures thereof, because they tend to provide better flame retardancy than other polyols. Aromatic polyether polyols include, for example, polyols based on toluene diamine (TDA), epoxy Novolak resins, or Mannich base initiators. In one embodiment, a Novolak type polyether polyol, which is an alkylene oxide adduct of a partially hydrolyzed phenol/formaldehyde resin is used.

Polyols reacts with isocyanates to form polyurethanes. "Isocyanate" refers to any compound, including polymers, that contains at least one isocyanate group such as monoisocyanates and polyisocyanates, which are reactive with the polyol or mixture thereof. The polyisocyanate compounds or mixture thereof, have an average of two or more, preferably an average of 2.5-4.0, isocyanate groups/molecule. The isocyanate compounds may be aromatic, aliphatic, cycloaliphatic or mixtures thereof.

Examples of suitable aromatic isocyanates include 4,4'-, 2,4' and 2,2'-isomers of diphenylmethane diisocyanate (MDI) and their isomeric mixtures, 2,6 isomers of toluene diisocyanate, toluene- 2,4- and 2,6-diisocyanate (TDI) and their isomeric mixtures, m- and p-phenylenediisocyanate, chlorophenylene-2,4-diisocyanate, diphenylene-4,4'-diisocyanate, 4,4'-diisocyanate-3,3'-dimehtyldiphenyl, 3-methyldiphenyl-methane-4,4'-diisocyanate and diphenyletherdiisocyanate and 2,4,6-triisocyanatotoluene and 2,4,4'-triisocyanatodiphenylether, tris-(4-isocyanatophenyl)methane, toluene-2,4,6-triyl triisocyanate, alkylaryl polyisocyanate such as xylene diisocyanate, 4,4'-dimethyldiphenylmethane-2,2',5',5'-tetra(isocyanate), a crude polyisocyanate such as crude toluene diisocyanate and crude methylene diphenyl diisocyanate or mixtures thereof, polymethylene polyphenyl isocyanate (commonly known as polymeric MDI, PMDI), m-phenylene diisocyanate, naphthylene-1,5-diisocyanate, 1- methoxyphenyl-2,4-diisocyanate, diphenylmethane-4,4'-biphenylene diisocyanate, 3,3'-dimethoxy- 4,4'-biphenyl diisocyanate, 3,3'-dimethyl-4,4'-biphenyl diisocyanate, 3,3'-dimethyldiphenylmethane- 4,4'-diisocyanate, isophorone diisocyanate, 1,3-bis-(isocyanatomethyl)benzene, cumene-2,4- diisocyanate, 4-methoxy-1,3-phenylene diisocyanate, 4-ethoxy-1,3-phenylene diisocyanate, 2,4'-diisocyanatodiphenyl ether, 5,6-dimethyl-1,3-phenylene diisocyanate, 2,4-dimethyl-1,3-phenylene diisocyanate, 4,4- diisocyanatodiphenyl ether, benzidine diisocyanate, 4,6-dimethyl-1,3-phenylene diisocyanate, 9,10- anthracene diisocyanate, 4,4'-diisocyanatodibenzyl, 3,3'-dimethyl-4,4'-diisocyanatodiphenylmethane, 2,6'-dimethyl-4,4'-diisocyanatodiphenyl and mixtures thereof.

Examples of suitable aliphatic isocyanates include, for example, ethylene diisocyanate, 1,6-hexamethylene diisocyanate, 1,4-tetramethylene diisocyanate, isophorone diisocyanate, cyclohexane 1,4-diisocyanate, 4,4'-dicyclohexylmethane diisocyanate, 1,3-bis(isocyanatomethyl)cyclohexane, 1,4- bis(isocyanatomethyl)cyclohexane, hexahydrotolylene diisocyanate (all isomers), saturated analogues of the above mentioned aromatic isocyanates, and mixtures thereof.

The isocyanate can comprise a mixture of the isocyanates. For example, commercially available mixtures of 2,4- and 2,6-isomers of toluene diisocyanates, polymeric and monomeric MDI blends (such as mixtures of toluene diisocyanates and PMDI, mixtures of diphenylmethane diisocyanates and PMDI) and TDI/MDI blends. In addition, modified polyisocyanates (such as polyisocyanates containing esters, ureas, biurets, allophanates and, preferably, carbodiimides and/or uretonomines, and isocyanurate and/or urethane group- containing diisocyanates or polyisocyanates), isocyanate-based prepolymers, quasi- (or semi-) prepolymers and mixtures thereof are also useful. Also suitable are polyisocyanates of higher functionality such as dimers and particularly NCO-terminated oligomers of isocyanates containing isocyanate rings as well as prepolymers and mixtures of the aforementioned isocyanates.

In production of rigid foams, polyisocyanate may include, for example, MDI, polymeric MDI, an MDI prepolymer, a polymeric MDI prepolymer, a modified MDI (such as polycarbodiimide-modified diphenylmethane diisocyanate), and mixtures thereof. Aromatic polyisocyanates may also be used. Preferred polyisocyanates are the polymeric MDI products, which are a mixture of polymethylene polyphenylene polyisocyanates in monomeric MDI. Polymeric MDI products may have a free MDI content of from 5 to 50% by weight, more preferably 10% to 40% by weight. Such polymeric MDI products are available from The Dow Chemical Company under the trademarks of PAPI™ and VORANATE™. In one embodiment, polyisocyanate is a polymeric MDI product having an average isocyanate functionality of from 2.6 to 3.3 isocyanate groups/molecule and an isocyanate equivalent weight of from 130 to 170. Suitable commercially available products include PAPI 27, VORANATE M229, VORANATE 220, VORANATE 290, VORANATE M595 and VORANATE M600, all from The Dow Chemical Company.

For the production of polyurethane foams, the polyurethane foam forming composition comprises at least one isocyanate and at least one polyol. An isocyanate index is desirably 30 or more, preferably 80 or more and at the same time is desirably 150 or less, preferably 130 or less. For the production of a polyisocyanurate foam, the isocyanate is present in an amount to provide an isocyanate index of desirably 150 or more, preferably 200 more, still more preferably 240 or more and at the same time desirably 600 or less, preferably 500 or less and still more preferably 400 or less. Isocyanate index is calculated as the number of isocyanate-groups divided by the number of isocyanate-reactive hydrogen atoms in a formulation (including those contained by isocyanate-reactive blowing agents such as water) and multiplying by 100. Thus, the isocyanate index expresses the amount of isocyanate actually used in a formulation divided by the amount of isocyanate theoretically required for reacting with the amount of isocyanate-reactive hydrogen used in a formulation and multiplying by 100.

Also included in the polyurethane foam forming composition is a blowing agent. Different types of blowing agents may be used in the invention, including physical blowing agents (such as hydrofluorocarbon and hydrocarbon blowing agents), chemical blowing agents, and mixtures thereof.

Examples of suitable hydrofluorocarbon blowing agents include HCFC-142b (1 - chloro-1,1-difluoroethane), HCFC-141b (1,1-dichloro-1-fluoroethane), HCFC-22 (chlorodifluoro-methane), HFC-245fa (1,1,1,3,3-pentafluoropropane), HFC-365mfc (1,1,1,3,3-penta-fluorobutane), HFC-227ea (1,1,1,2,3,3,3-heptafluoropropane), HFC-134a (1,1,1,2-tetrafluoroethane), HFC-125 (1,1,1,2,2-pentafluoroethane), HFC-143 (1,1,2-trifluoroethane), HFC 143A (1,1,1-trifluoroethane), HFC-152 (1,1-difluoroethane), HFC-227ea (1,1,1,2,3,3,3-heptafluoropropane), HFC-236ca (1,1,2,2,3,3-hexafluoropropane), HFC 236fa (1,1,1,3,3,3-hexafluoroethane), HFC 245ca (1,1,2,2,3-pentafluoropentane), HFC 356mff (1,1,1,4,4,4-hexafluorobutane), HFC-365mfc (1,1,1,3,3-pentafluorobutane), and mixtures thereof. Examples of hydrocarbon blowing agents include, for example, butane, isobutane, 2,3-dimethylbutane, n- and i-pentane isomers, hexane isomers, heptane isomers and cycloalkanes including cyclopentane, cyclohexane, cycloheptane, and combinations thereof. Cyclopentane, n-pentane and isopentane are preferred among the hydrocarbon blowing agents. In one embodiment, the blowing agents include hydroflurocarbon compounds. The amount of hydrocarbon or hydrofluorocarbon is depending on the desired density of the foam, and is desirably one (1) part or more, preferably 5 parts or more, still more preferably 10 parts or more by weight and at the same time is desirably 40 parts or less, preferably 35 parts or less and still more preferably 30 parts or less by weight, based on 100 parts of the polyols.

The blowing agent can include or consist of a chemical blowing agent such as formic acid, another carboxylic acid or water. The amount of water by weight may be 0.1 parts or more, preferably 0.5 parts or more, and at the same time 50 parts or less, preferably 20 parts or less, based upon 100 parts of the polyols.

In one embodiment, a combination of water and a physical blowing agent may be used to produce the foam. The amount of water if present as an additional blowing agent by weight is desirably 2 parts or more, preferably 3 parts or more, still more preferably 5 parts or more and at the same time is desirably 40 parts or less, preferably 30 parts or less, more preferably 25 parts or less and still most preferably 20 parts or less. In one embodiment, when preparing a polyisocyanurate foam, in order to facilitate and give desirable processing characteristics, the amount of water by weight may be 2 parts or less, preferably 1.5 parts or less, based on 100 parts of the polyols.

The polyurethane foam forming formulation may optionally contain auxiliary additives, including, for example, catalysts, surfactants, crosslinking agents, emulsifiers, silicone surfactants, preservatives, colorants, antioxidants, reinforcing agents, including recycled polyurethane foam in form of powder.

Examples of suitable urethane catalysts may be used, including tertiary amine compounds, amines with isocyanate reactive groups and organometallic compounds. Examples of tertiary amine compounds include trimethylamine, triethylamine, N-methylmorpholine, N-ethylmorpholine, N-coco-morpholine, morpholine, N,N-dimethylcyclohexylamine, pentamethyldiethylenetriamine, tetramethyl ethylenediamine, bis (dimethylaminoethyl)ether, 3-methoxy-N-dimethylpropylamine, dimethylethanolamine, N,N-dimethyl-N',N'-dimethyl isopropylpropylenediamine, N,N-diethyl-3-diethylaminopropylamine, N,N-dimethylbenzylamine, N,N-dimethylethanolamine, N,N-dimethylpiperazine, 1-methyl-4-dimethylaminoethyl-piperazine, 1,4-diazobicyclo[2,2,2]octane, bis(dimethylaminoethyl)ether, bis(2-dimethylaminoethyl)ether, N,N-dimorpholine diethylether, 4,4'-(oxydi-2,1-ethanediyl) bis, pentamethylene diamine, and mixtures thereof. Examples of organometallic catalysts include compounds of bismuth, lead, tin, titanium, iron, antimony, uranium, cadmium, cobalt, thorium, aluminum, mercury, zinc, nickel, cerium, molybdenum, vanadium, copper, manganese, zirconium, and combinations thereof. Organotin catalysts include, for example, stannous octoate, stannous oleate, stannic chloride, dimethyltin dilaurate and dibutyltin dilaurate.

A mixture of at least one catalyst that promotes the reaction of water with a polyisocyanate, and/or at least one other catalyst that promotes the reaction of the polyol(s) with the polyisocyanate may be used. A trimerization catalyst may also be employed to promote the trimerization reaction of isocyanates to form isocyanurate groups. The trimerization catalysts may be any known to those skilled in the art, including glycine salts, tertiary amine trimerization catalysts, alkali metal alkoxides, alkali metal carboxylic acid salts, and mixtures thereof. Examples of the trimerization catalysts include, for example, quaternary ammonium salts, 2,4,6-(N,N-dimethylaminomethyl)phenols, hexahydrotriazines, potassium salts of carboxylic acids such as potassium octoate, potassium acetate, and mixtures thereof. Representative of the trimerization catalysts may include those commercially available from Air Products and Chemicals, Inc., including, for example, DABCO™ TMR (DABCO is a trademark of Air Products and Chemicals, INC.), DABCO TMR-2, DABCO TMR-3, DABCO TMR-4, and DABCO K15. In one embodiment, trimerization catalysts (such as potassium-based catalysts) are included in the production of polyisocyanurate foams. The trimerization catalyst is generally employed in an amount which provides trimerization of isocyanate groups, ranging from 0.2 percent to 10 percent by weight of the polyols present in the polyurethane foam forming composition. In the preparation of polyisocyanurate foams, relatively large amounts of trimerization catalysts are usually required to produce the trimerization needed to form isocyanurate groups.

The amount of catalysts is selected to provide a desired reaction rate. The amount that is used will depend somewhat on the particular catalyst. Generally, the amount of catalyst by weight is desirably 0.1 % or more, preferably 1 % or more, still more preferably 1.5 % or more and at the same time is desirably 30 % or less, preferably 13 % or less and still more preferably 10 % or less, based on the weight of the polyols.

The polyurethane foam forming composition may optionally include a surfactant. Examples of suitable surfactants include, for example, silicone surfactants including commercially available polysiloxane/polyether copolymers and nonionic polyether surfactants. The surfactant may be used in a conventional amount, desirably 0.5 parts or more, preferably 1.5 parts or more and at the same time desirably 10 parts or less, preferably 4 parts or less, per 100 parts by weight of the polyol. The polyurethane foam forming composition may optionally include one or more chain extenders and/or crosslinkers. The crosslinkers may have at least three isocyanate-reactive groups per molecule and an equivalent weight per isocyanate-reactive group of less than 400. Examples of suitable crosslinkers may include diethanol amine, monoethanol amine, triethanol amine, mono- di- or tri(isopropanol) amine, glycerine, trimethylol propane, pentaerythritol, and sorbitol. If present, the amount of the crosslinkers is typically 0.1 wt% or more, preferably 0.5 wt% or more and at the same time typically 10 wt% or less, preferably 3 wt% or less, based upon the weight of the polyols. The chain extender may have two isocyanate-reactive groups per molecule and an equivalent weight per isocyanate-reactive group of less than 400. Examples of suitable chain extenders may include, for example, amines ethylene glycol, diethylene glycol, 1,2-propylene glycol, dipropylene glycol, tripropylene glycol, ethylene diamine, phenylene diamine, bis(3-chloro-4-aminophenyl)methane and 2,4-diamino-3,5-diethyl toluene. If present, the chain extenders are typically in an amount of 1 wt% or more, preferably 3 wt% or more and at the same time typically 50 wt% or less, preferably 25 wt% or less, based upon the weight of the polyols.

The polyurethane foam forming composition may be free of (that is, have an absence of) inorganic fillers, in particular, metal-based inorganic fillers, for easy processability. However, if inorganic fillers are included, examples include, metal hydrate (such as alumina trihydrate and magnesium hydroxide), zinc salts (such as zinc borate and zinc stannate), antimonium oxide and molybdenum containing compounds (such as molybdates, any salts of molybdic acid) and mixtures thereof. Furthermore, a dicyclopentadienyl iron compound may be included in the polyurethane foam forming composition. The dicyclopentadienyl iron compound and the trialkyl phosphate may be mixed together prior to addition to a polyurethane foam forming composition; this surprisingly avoids a problem of achieving a uniform distribution of the small amount of the dicyclopentadienyl iron compound in a foam produced from the polyurethane foam forming composition. Surprisingly, the combination of the dicyclopentadienyl iron compound and trialkyl phosphate further improves the smoke suppression property of the polyurethane foam, which may be due to good dissolubility of the dicyclopentadienyl iron compound in the trialkyl phosphate. Hence, uniform distribution of the dicyclopentadienyl iron compound is desirable to achieve optimal smoke suppression. The dicyclopentadienyl iron compounds include dicyclopentadienyl iron (also known as ferrocene), dicyclopentadienyl iron derivatives, and mixtures thereof. Examples of suitable dicyclopentadienyl iron derivatives include ethyldicyclopentadienyl iron, n-butyldicyclopentadienyl iron, t-butyldicyclopentadienyl iron, 2,2-di(ethyldicyclopentadienyl iron)-propane, n-octyldicyclopentadienyl iron, butyryldicyclopentadienyl iron, diacetyldicyclopentadienyl iron, dibutyryldicyclopentadienyl iron, N,N-dimethylaminomethyl ferrocene, and mixtures thereof. In one embodiment, dicyclopentadienyl iron may be used. The amount of the dicyclopentadienyl iron compound may be desirably 0.01 wt% or more, preferably 0.1 wt% or more, still more preferably 0.2 wt% or more, and at the same time desirably 1 wt% or less, preferably 0.8 wt% or less and still more preferably 0.7 wt% or less, based upon the weight of the polyurethane foam.

A polyurethane foam is prepared from a polyurethane foam forming composition. In general, a polyurethane foam may be prepared by bringing the various components of the polyurethane foam forming composition together under conditions such that the polyol(s) and isocyanate(s) react while the blowing agent causes the composition to expand.

The components of the polyurethane foam forming composition may be mixed together in any convenient manner, for example by using any of the mixing equipment described in the prior art for the purpose, such as a spray apparatus, a mix head with or without a static mixer, or a vessel, and then spraying or otherwise depositing the reacting mixture onto a substrate. The foam may be formed by the so-called prepolymer method, in which a stoichiometric excess of the polyisocyanate is first reacted with the high equivalent weight polyol(s) to form a prepolymer, which is in a second step reacted with a chain extender and/or water to form the desired foam. Frothing methods are also suitable. So-called one-shot methods may be preferred. In such one-shot methods, the polyisocyanate and all polyisocyanate-reactive are simultaneously brought together and caused to react. The rigid foam may also be produced in the form of slabstock, moldings, cavity filling, sprayed foam, frothed foam or laminates with other material such as paper, metal, plastics or wood-board. Flexible foams are either free rise and molded.

In general, the rigid foams may be produced by discontinuous or continuous processes, including the process referred to generally as the discontinuous panel process (DCP) and continuous lamination, with the foaming reaction and subsequent curing being carried out in molds or on conveyors. The density of the resulting foam may be 10 kg/m³ or more, preferably 15 kg/m³ or more, more preferably 17 kg/m³ or more, most preferably 30 kg/m³ or more, and at the same time typically 200 kg/m³ or less, preferably 90 kg/m³ or less, more preferably 80 kg/m³ or less, and still most preferably 70 kg/m³ or less.

The applications for the polyurethane foams produced by the invention are those known in the industry. For example, rigid foams are used in the construction industry and for insulation in appliances such as refrigerators. Flexible foams are used in applications such as furniture, shoe soles, automobile seats, sun visors, steering wheels, armrests, door panels, noise insulation parts and dashboards.

### EXAMPLES

The following examples illustrate embodiments of the present invention. All parts and percentages are by weight unless otherwise indicated.

VORANOL 280 polyol is a polyoxyethylene/ polyoxypropylene random copolymer polyol having an equivalent weight of 1795, initiated by a blend of glycerol and sucrose, having nominal functionality of 6.9 available from The Dow Chemical Company.

STEPANPOL™ PS 2352 polyol (STEPANPOL is a trademark of Stephan Company) is an ortho phthalate-diethylene glycol based aromatic polyester polyol with a reported hydroxyl value of 240 with average functionality of 2, available from Stephan Company.

STEPANPOL PS 1922 polyol is an aromatic polyester polyol having an average functionality of 2 and OH value of 190 mg KOH/g, available from Stephan Company. VORANOL IP 585 polyol is an aromatic resin-initiated polyoxypropylene polyoxyethylene polyol (Novolak-type polyol) with average hydroxyl number of 210 and average functionality of 3.3, available from The Dow Chemical Company.

MEG (monoethyleneglycol) has an OH value of 1800 mg KOH/g and functionality 2, available from Shanxi Tianshili Import and Export Co. Ltd..

PAPI 27 PMDI is a polymeric methylene diphenyl diisocyanate mixture with functionality 2.7, available from The Dow Chemical Company.

TEP (Triethyl Phosphate) is available JCIG Jilin City Lianhua Welfare Chemical Industry Factory.

TCPP (tris-(2-chloro isopropyl) phosphate) is available from Zhangjiagang Changyu Chemical Co., Ltd..

RDP (resorcinol bis(diphenylphosphate)) is a flame retardant available from Sinopharm Chemical Reagent Co., Ltd..

TBEP (Tributoxyethyl phosphate) is available from Zhangjiagang Dongsha Chemical Co., Ltd..

DMMP (Dimethyl methyl phosphonate) is a flame retardant available from Sinopharm Chemical Reagent Co., Ltd..

DEEP (Diethyl ethyl phosphonate) is a flame retardant available from Albermarle Chemical.

HCFC-141b is 1, 1-dichloro-1-fluoroethane, which is a blowing agent available from Zhejiang Sanmei.

DABCO K-15 catalyst is a solution of potassium-octoate in diethylene glycol, available from Air Products and Chemicals.

POLYCAT™ 5 catalyst (POLYCAT is a trademark of Air Products and Chemicals, Inc.) is pentamethyl diethylene triamine, available from Air Products and Chemicals.

DABCO TMR-2 catalyst is 2-hydroxypropyl trimethylammonium formate in dipropylene glycol, available from Air Products and Chemicals.

PC CAT™ NP40 catalyst is 1,3,5-tris(3-dimethyl aminopropyl)hexahydrotriazine, available from Performance Chemicals (PC CAT is a trademark of Performance Chemicals Handels GmbH).

KAC catalyst is potassium acetate in di-ethylene glycol, available from DaJiang Chemical Company

DABCO DC193 surfactant is a polysiloxane based surfactant available from Air Products and Chemicals.

DABCO DC5598 surfactant is polysiloxane based surfactant available from Air Products and Chemicals.

Ferrocene is dicyclopentadienyl iron, available from Sinopharm Chemical Reagent Co., Ltd.

Alpha Methyl Styrene is a stabilizer available from Quimidroga S.A..

### Examples 1-4

Rigid polyurethane foams were prepared by means of hand-mix experiments performed in a plastic cup based on formulations shown in Table 1. Triethyl phosphate was blended with PS 2352, PS 1922 and VORANOL 280, followed by one minute of mixing at 3000 rpm. Then other additives (K-15, PC-5, DC193, deionized water and HCFC-141b) were added, followed by another one-minute blending at 3000 rpm. Finally, PMDI was added with high speed blending (3000-4000rpm) for 6 seconds. The obtained reacting mixture was then poured into an open box for foaming and produced, over a time of one minute, a rigid foam. The rigid foams were cut into specimens for ASTM D2843-1999 Smoke Density testing, performed by means of a JCY-2 machine. For each sample, 5 specimens were tested. Each specimen was exposed to a flame for 4 minutes, then Maximum Smoke Density (MSD) and Smoke Density Rating (SDR) were recorded.

The rigid foams were cut into specimens (250 mm x 90 mm x 20mm) for German Din 4102 B2 Flame Retardance testing in a standard ISO 11925 chamber. The specimens were conditioned at 23±2°C and 50±2% relative humidity for at least 24 hours before the flame retardance testing. For each formulation, 5 specimens were tested. Each specimen was exposed to a flame for 15 seconds, and then After Flame Time (AFT), maximum flame height (FH) and dripping performance were recorded.

### Example 5

Based on formulations shown in Table 1, polyurethane foams in Example 5 were prepared as in Example 1 except Ferrocene was further added and mixed into TEP prior to blending with the polyols.

### Comparative Examples 1-6

Based on formulations shown in Table 2, polyurethane foams in Comparative Examples 1-6 were prepared as in Example 1 except no flame retardant (Comparative example 1), TCPP (Comparative Examples 2), RDP (Comparative Examples 3), TBEP (Comparative Examples 4), DMMP (Comparative Examples 5) or DEEP (Comparative Examples 6) was added instead of TEP.

As shown in Table 1 and 2, polyurethane foams incorporating flame retardants all showed a lower flame height in DIN 4102 test than the polyurethane foam containing no flame retardant. Surprisingly, the results show that triethyl phosphate provides lower values of MSD and SDR even at lower loading (Example 1-4 having TEP content of 3.47 wt%, 4.63 wt%, 5.79 wt%, 11.57 wt% based on the weight of PU foam, respectively), compared to the halogen-containing TCPP, aromatic containing RDP, tributoxyethyl phosphate, dimethyl methyl phosphonate and diethyl ethyl phosphonate (Comparative examples 2-6, respectively). In particular, Example 3 significantly decreases the smoke density of the foam by 19% or more compared to the comparative phosphates and phosphonates. Therefore, the addition of TEP can significantly improve smoke suppression property of polyurethane foams. In addition, Example 5 shows that the addition of TEP together with ferrocene further decreases the smoke density of the polyurethane foam.

**Table 1. Formulations and properties for rigid polyurethane foams**

| | | Example 1 | Example 2 | Example 3 | Example 4 | Example 5 |
|---|---|---|---|---|---|---|
| PS 2352 (g) | | 26.15 | 26.15 | 26.15 | 26.15 | 26.15 |
| PS 1922 (g) | | 26.13 | 26.13 | 26.13 | 26.13 | 26.13 |
| V 280 (g) | | 13.17 | 13.17 | 13.17 | 13.17 | 13.17 |
| K-15 (g) | | 1.30 | 1.30 | 1.30 | 1.30 | 1.30 |
| PC-5 (g) | | 0.30 | 0.30 | 0.30 | 0.30 | 0.30 |
| DC193 (g) | | 2.00 | 2.00 | 2.00 | 2.00 | 2.00 |
| Deionized water (g) | | 0.55 | 0.55 | 0.55 | 0.55 | 0.55 |
| HCFC-141b (g) | | 15.40 | 15.40 | 15.40 | 14.40 | 15.40 |
| TEP (g) | | 9 | 12 | 15 | 30 | 15 |
| Ferrocene (g) | | | | | | 1.5 |
| Isocyanate Index | | 360 | 360 | 360 | 360 | 360 |
| PMDI (g) | | 160 | 160 | 160 | 160 | 160 |
| Density (kg/m³) | | 47.9 | 48.37 | 46.3 | 46.3 | 44.93 |
| Gel time* (second) | | 40 | 40 | 40 | 40 | 40 |
| ASTM D2843-1999 | MSD | 59.54 | 58.88 | 54.19 | 54.57 | 44.65 |
| | SDR | 45.85 | 44.85 | 40.55 | 41.37 | 33.97 |
| Din 4102 | AFT (sec) | 0 | 0 | 0 | 0 | 0 |
| | FH (mm) | 80 | 82 | 85 | 85 | 68 |
| | Pass/ Fail | Pass | Pass | Pass | Pass | Pass |
| | Dripping | No | No | No | No | No |

| | | | | | | |
|---|---|---|---|---|---|---|
| *Note: stirring time: 7 seconds | | | | | | |

**Table 2. Formulations and properties for comparative rigid polyurethane foams**

| | | Comparative example 1 | Comparative example 2 | Comparative example 3 | Comparative example 4 | Comparative example 5 | Comparative example 6 |
|---|---|---|---|---|---|---|---|
| PS 2352 (g) | | 26.15 | 26.15 | 26.15 | 26.15 | 26.15 | 26.15 |
| PS 1922 (g) | | 26.13 | 26.13 | 26.13 | 26.13 | 26.13 | 26.13 |
| V 280 (g) | | 13.17 | 13.17 | 13.17 | 13.17 | 13.17 | 13.17 |
| K-15 (g) | | 1.30 | 1.30 | 1.30 | 1.30 | 1.30 | 1.30 |
| PC-5 (g) | | 0.30 | 0.30 | 0.30 | 0.30 | 0.30 | 0.30 |
| DC193 (g) | | 2.00 | 2.00 | 2.00 | 2.00 | 2.00 | 2.00 |
| Deionized water (g) | | 0.55 | 0.55 | 0.55 | 0.55 | 0.55 | 0.55 |
| HCFC-141b (g) | | 15.40 | 15.40 | 15.40 | 15.40 | 14.40 | 15.40 |
| TCPP (g) | | | 15 | | | | |
| RDP (g) | | | | 15 | | | |
| TBEP (g) | | | | | 15 | | |
| DMMP (g) | | | | | | 15 | |
| DEEP (g) | | | | | | | 15 |
| Isocyanate Index | | 360 | 360 | 360 | 360 | 360 | 360 |
| PMDI (g) | | 160 | 160 | 160 | 160 | 160 | 160 |
| Density (kg/m³) | | 43.3 | 47.9 | 48.37 | 46.99 | 45.28 | 44.41 |
| Gel time* (second) | | 46 | 47 | 50 | 45 | 36 | 46 |
| ASTM D2843 -1999 | MSD | 76.18 | 65.95 | 69.32 | 68.21 | 70.04 | 66.23 |
| | SDR | 61.92 | 50.15 | 52.72 | 53.18 | 54.00 | 52.28 |
| Din 4102 | AFT (sec) | 0 | 0 | 0 | 0 | 0 | 0 |
| | FH (mm) | 100 | 70 | 67 | 85 | 65 | 77.50 |
| | Pass/ Fail | Pass | Pass | Pass | Pass | Pass | Pass |
| | Dripping | No | No | No | No | No | No |

| | | | | | | | |
|---|---|---|---|---|---|---|---|
| *Note: stirring time: 7 seconds | | | | | | | |

### Example 6

Polyurethane foams were prepared by means of hand-mix experiments performed in a plastic cup, based on formulations shown in Table 3. Triethyl phosphate was blended with IP 585 and PS 2352, followed by one minute of mixing at 3000 rpm. Then other additives (TMR-2, NP 40, PC-5, KAC, DC-5598, MEG, alpha Methyl Styrene, deionized water and HCFC-141b) were added, followed by another one-minute blending at 3000 rpm. Finally, PMDI was added with high speed blending (3000-4000rpm) for 6 seconds. The obtained composite was poured into an open box for foaming.

### Comparative examples 7-9

Polyurethane foams in Comparative Examples 7-9 were prepared as in Example 6 except TCPP (Comparative Examples 7), TBEP (Comparative Examples 8), or DMMP (Comparative Examples 9) was added instead of TEP.

As shown in Table 3, the addition of TEP significantly decreases the smoke density of rigid polyurethane foams (Example 6 with 13.4 wt% TEP based on the weight of PU foam) compared to the comparative examples. The smoke density of the polyurethane foam comprising TEP is 16.9% lower than that of the sample incorporating TCPP (Comparative example 7). In addition, the addition of TEP shows comparable or even better flame retardancy than the comparative examples as shown by the flame height measurements of the DIN 4102 test.

**Table 3. Formulations and properties for rigid polyurethane foams**

| | | Comparative example 7 | Comparative example 8 | Comparative example 9 | Example 6 |
|---|---|---|---|---|---|
| IP 585 (g) | | 19.66 | 19.66 | 19.66 | 19.66 |
| PS 2352 (g) | | 35.61 | 35.61 | 35.61 | 35.61 |
| MEG (g) | | 1.95 | 1.95 | 1.95 | 1.95 |
| TMR-2 (g) | | 2.34 | 2.34 | 2.34 | 2.34 |
| NP 40 (g) | | 0.29 | 0.29 | 0.29 | 0.29 |
| PC-5 (g) | | 0.09 | 0.09 | 0.09 | 0.09 |
| KAC (g) | | 0.36 | 0.36 | 0.36 | 0.36 |
| DC-5598 (g) | | 1.91 | 1.91 | 1.91 | 1.91 |
| alpha Methyl Styrene (g) | | 0.10 | 0.10 | 0.10 | 0.10 |
| Deionized water (g) | | 1.321 | 1.321 | 1.321 | 1.321 |
| HCFC-141b (g) | | 12.50 | 12.50 | 12.50 | 12.50 |
| TCPP (g) | | 36.38 | | | |
| TBEP (g) | | | 36.38 | | |
| DMMP (g) | | | | 36.38 | |
| TEP (g) | | | | | 36.38 |
| Isocyanate Index | | 274 | 274 | 274 | 274 |
| PMDI (g) | | 160 | 160 | 160 | 160 |
| Density (kg/m³) | | 39.15 | 38.99 | 34.26 | 36.51 |
| Gel time* (second) | | 33 | 33 | 20 | 43 |
| ASTM D2843-1999 test | MSD | 95.91 | 91.72 | 90.11 | 79.99 |
| | SDR | 76.15 | 76.86 | 74.58 | 63.27 |
| Din 4102 test | AFT (sec) | 0 | 0 | 0 | 0 |
| | FH (mm) | 100 | 100 | 80 | 80 |
| | Pass/ Fail | Pass | Pass | Pass | Pass |
| | Dripping | No | No | No | No |

| | | | | | |
|---|---|---|---|---|---|
| *Note: stirring time 7 seconds | | | | | |

## Claims

1. Use of a trialkyl phosphate as a smoke suppressant in polyurethane foam, wherein the trialkyl phosphate has at least one alkyl group with two carbon atoms and the polyurethane foam has an absence of halogenated flame retardants.

2. The use of Claim 1, wherein the trialkyl phosphate is included in the polyurethane foam by incorporating the trialkyl phosphate into a polyurethane foam forming composition and then forming a polyurethane foam from the polyurethane foam forming composition.

3. The use of Claim 1 wherein the trialkyl phosphate is triethyl phosphate.

4. The use of Claim 1, wherein the concentration of the trialkyl phosphate is from 3 to 25 weight-percent based upon the weight of the polyurethane foam.

5. The use of Claim 1, wherein the polyurethane foam further comprises at least one dicyclopentadienyl iron compound.

6. The use of Claim 5, wherein the dicyclopentadienyl iron compound is at a concentration of 0.01 to one weight-percent based on the total polyurethane foam weight.

7. The use of Claim 5, wherein the dicyclopentadienyl iron compound is mixed with the trialkyl phosphate to form a mixture and then the mixture is added to a polyurethane foam forming formulation and then the polyurethane foam is made from the polyurethane foam forming formulation.

8. The use of Claim 1, wherein the polyurethane foam is free of inorganic fillers.

9. The use of Claim 1, wherein the polyurethane foam is a rigid polyurethane foam.

10. The use of Claim 1, wherein the polyurethane foam is a polyisocyanurate foam.

11. The use of Claim 10, wherein the isocyanate index is at least 240.

## Patentansprüche

1. Eine Verwendung eines Trialkylphosphats als ein Rauchminderer in Polyurethanschaum, wobei das Trialkylphosphat mindestens eine Alkylgruppe mit zwei Kohlenstoffatomen aufweist und der Polyurethanschaum ein Nichtvorhandensein von halogenierten Flammhemmern aufweist.

2. Verwendung gemäß Anspruch 1, wobei das Trialkylphosphat in dem Polyurethanschaum durch Inkorporieren des Trialkylphosphats in eine polyurethanschaumbildende Zusammensetzung und dann Bilden eines Polyurethanschaums aus der polyurethanschaumbildenden Zusammensetzung eingeschlossen wird.

3. Verwendung gemäß Anspruch 1, wobei das Trialkylphosphat Triethylphosphat ist.

4. Verwendung gemäß Anspruch 1, wobei die Konzentration des Trialkylphosphats bezogen auf das Gewicht des Polyurethanschaums 3 bis 25 Gewichtsprozent beträgt.

5. Verwendung gemäß Anspruch 1, wobei der Polyurethanschaum ferner mindestens eine Dicyclopentadienyleisenverbindung beinhaltet.

6. Verwendung gemäß Anspruch 5, wobei die Dicyclopentadienyleisenverbindung bezogen auf das Gesamtgewicht des Polyurethanschaums in einer Konzentration von 0,01 bis einem Gewichtsprozent vorliegt.

7. Verwendung gemäß Anspruch 5, wobei die Dicyclopentadienyleisenverbindung mit dem Trialkylphosphat gemischt wird, um eine Mischung zu bilden, und dann die Mischung zu einer polyurethanschaumbildenden Formulierung zugegeben wird und dann der Polyurethanschaum aus der polyurethanschaumbildenden Formulierung hergestellt wird.

8. Verwendung gemäß Anspruch 1, wobei der Polyurethanschaum frei von anorganischen Füllern ist.

9. Verwendung gemäß Anspruch 1, wobei der Polyurethanschaum ein Polyurethanhartschaum ist.

10. Verwendung gemäß Anspruch 1, wobei der Polyurethanschaum Polyisocyanuratschaum ist.

11. Verwendung gemäß Anspruch 10, wobei der Isocyanatindex mindestens 240 beträgt.

## Revendications

1. Utilisation d'un phosphate de trialkyle comme suppresseur de fumées dans de la mousse de polyuréthane, le phosphate de trialkyle ayant au moins un groupe alkyle avec deux atomes de carbone et la mousse de polyuréthane étant sans retardateurs de flamme halogénés.

2. L'utilisation de la revendication 1, dans laquelle le phosphate de trialkyle est inclus dans la mousse de polyuréthane par incorporation du phosphate de trialkyle dans une composition moussante de polyuréthane, puis par formation d'une mousse de polyuréthane à partir de la composition moussante de polyuréthane.

3. L'utilisation de la revendication 1 dans laquelle le phosphate de trialkyle est le phosphate de triéthyle.

4. L'utilisation de la revendication 1, dans laquelle la concentration du phosphate de trialkyle va de 3 à 25 pour cent en poids rapporté au poids de la mousse de polyuréthane.

5. L'utilisation de la revendication 1, dans laquelle la mousse de polyuréthane comprend en outre au moins un composé dicyclopentadiényle de fer.

6. L'utilisation de la revendication 5, dans laquelle le composé dicyclopentadiényle de fer est à une concentration de 0,01 à un pour cent en poids rapporté au poids total de mousse de polyuréthane.

7. L'utilisation de la revendication 5, dans laquelle le composé dicyclopentadiényle de fer est mélangé au phosphate de trialkyle pour former un mélange, puis le mélange est ajouté à une formulation moussante de polyuréthane, puis la mousse de polyuréthane est réalisée à partir de la formulation moussante de polyuréthane.

8. L'utilisation de la revendication 1, dans laquelle la mousse de polyuréthane est dépourvue de charges inorganiques.

9. L'utilisation de la revendication 1, dans laquelle la mousse de polyuréthane est une mousse de polyuréthane rigide.

10. L'utilisation de la revendication 1, dans laquelle la mousse de polyuréthane est une mousse de polyisocyanurate.

11. L'utilisation de la revendication 10, dans laquelle l'indice d'isocyanate est de 240 au moins.
